(19) Europäisches Patentamt
European Patent Office
Office européen des brevets

(11) EP 4 130 058 A1

(12) EUROPEAN PATENT APPLICATION
published in accordance with Art. 153(4) EPC

(43) Date of publication:
**08.02.2023 Bulletin 2023/06**

(21) Application number: **21774848.2**

(22) Date of filing: **22.03.2021**

(51) International Patent Classification (IPC):
***C08F 8/16*** *(1974.07)* ***C08F 8/32*** *(1974.07)*
***C08F 220/14*** *(1974.07)* ***C08F 222/04*** *(1974.07)*
***C08F 222/40*** *(1974.07)* ***C08L 33/12*** *(1974.07)*
***C08L 101/00*** *(1974.07)* ***C08J 5/18*** *(1974.07)*

(52) Cooperative Patent Classification (CPC):
**C08F 8/16; C08F 8/32; C08F 220/14; C08J 5/18; C08L 33/12; C08L 101/00;** C08F 222/04; C08F 222/40

(86) International application number:
**PCT/JP2021/011682**

(87) International publication number:
**WO 2021/193521 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2020 JP 2020052178**

(71) Applicant: **Kuraray Co., Ltd.**
**Kurashiki-shi, Okayama 710-0801 (JP)**

(72) Inventors:
- **UMEDA, Yasunari**
  **Tainai-shi, Niigata 959-2691 (JP)**
- **NOMOTO, Yusaku**
  **Tainai-shi, Niigata 959-2691 (JP)**

(74) Representative: **Müller-Boré & Partner Patentanwälte PartG mbB**
**Friedenheimer Brücke 21**
**80639 München (DE)**

# (54) METHACRYLIC COPOLYMER, COMPOSITION, SHAPED OBJECT, METHOD FOR PRODUCING FILM OR SHEET, AND LAYERED PRODUCT

(57) The present invention provides a methacrylic copolymer containing: 40 to 87% by mass of a methyl methacrylate unit; 6 to 30% by mass of a structural unit (R) having at least one ring structure in a main chain, the structural unit (R) being selected from the group consisting of a lactone ring unit, a glutaric anhydride unit, and an N-substituted or unsubstituted glutarimide unit; and 7 to 30% by mass of an α-methylstyrene unit, in which the methacrylic copolymer has a glass transition temperature of 120°C or higher, the methacrylic copolymer has a negative value of a photoelastic coefficient, and an orientation birefringence of a stretched film is positive, the stretched film being obtained by stretching a sheet formed of the methacrylic copolymer with a size of 20 mm in width × 40 mm in length × 1.0 mm in thickness by 100% in one direction at a rate of 3 mm/min and a temperature higher than the glass transition temperature by 10°C.

EP 4 130 058 A1

## Description

### Technical Field

The present invention relates to a methacrylic copolymer, a composition, a molded article, a method for producing a film or a sheet, and a laminate.

### Background Art

Since a (meth)acrylic resin is excellent in transparency and has a small optical distortion, the (meth)acrylic resin is widely used as a material constituting an optical member such as a lens, a prism, a retardation film, a light guide plate, a light diffusion film, and a polarizing plate protective film. In these applications, a birefringence of a molded product affects performance of a device. For example, in a device such as a liquid crystal display device, an optical disk device, or a projection screen, when a film, a lens, or the like having a birefringence exists in an optical path, image quality or signal reading performance is adversely affected. Therefore, in recent years, there is a demand for a material that suppresses a birefringence as small as possible.

The birefringence exhibited by the resin includes an orientation birefringence caused by an orientation of polymer molecules and a photoelastic birefringence caused by stress, and each sign exhibits a characteristic inherent in a polymer derived from a primary structure of the polymer. One of means for reducing the birefringence of the material is a method of blending polymers having a positive birefringence and a negative birefringence. In order to highly control the birefringence by this method, it is required to use a material having a sign of an orientation birefringence or a photoelastic coefficient different from that of the main resin and having high compatibility as an additive resin.

As a polymer having a positive value of an orientation birefringence and a negative value and a photoelastic coefficient, a polymer of 2,2,2-trifluoroethyl methacrylate is known (PTL 1). However, the polymer has a low glass transition temperature, and has a problem in heat resistance. In addition, compatibility with another resin is low, and it is difficult to use the resin as an additive resin for controlling a birefringence of the other resin having an opposite sign of an orientation birefringence or a photoelastic coefficient. Furthermore, since the monomer itself is expensive, there is a limitation on industrial use thereof.

### Citation List

### Patent Literature

PTL 1: WO2015/079694A

### Summary of Invention

### Technical Problem

An object of the present invention is to provide a methacrylic copolymer that has high heat resistance, a positive value of an orientation birefringence, and a negative value of a photoelastic coefficient, and is excellent in compatibility with another resin, and a composition, a film, a sheet, a laminate, and a molded article that contain the copolymer.

### Solution to Problem

As a result of conducting intensive studies to achieve the above object, the present inventors have completed the present invention including the following embodiments.

[1] A methacrylic copolymer containing:

40 to 87% by mass of a methyl methacrylate unit;
6 to 30% by mass of a structural unit (R) having at least one ring structure in a main chain, the structural unit (R) being selected from the group consisting of a lactone ring unit, a glutaric anhydride unit, and an N-substituted or unsubstituted glutarimide unit; and
7 to 30% by mass of an $\alpha$-methylstyrene unit,
wherein the methacrylic copolymer has a glass transition temperature of 120°C or higher,
the methacrylic copolymer has a negative value of a photoelastic coefficient, and
an orientation birefringence of a stretched film is positive, the stretched film being obtained by stretching a sheet

formed of the methacrylic copolymer with a size of 20 mm in width × 40 mm in length × 1.0 mm in thickness by 100% in one direction at a rate of 3 mm/min and a temperature higher than the glass transition temperature by 10°C.

[2] The methacrylic copolymer according to [1], wherein the structural unit (R) is an N-substituted or unsubstituted glutarimide unit represented by Formula (1):

[Chem. 1]

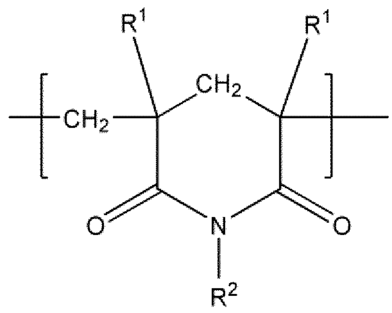

(1)

in Formula (1), $R^1$'s are each independently a hydrogen atom or a methyl group, and $R^2$ is a hydrogen atom, an alkyl group having 1 to 18 carbon atoms, a cycloalkyl group having 3 to 12 carbon atoms, or an organic group having an aromatic ring and 6 to 15 carbon atoms.

[3] A composition obtained by melt-kneading the methacrylic copolymer according to [1] or [2] and another resin.

[4] A molded article containing the methacrylic copolymer according to [1] or [2] or the composition according to [3].

[5] The molded article according to [4], wherein the molded article is a film or a sheet.

[6] A method for producing a film or a sheet, the method including a step of molding the methacrylic copolymer according to [1] or [2] or the composition according to [3] into a film or a sheet by a melt-molding method.

[7] A method for producing a film or a sheet, the method including a step of molding the methacrylic copolymer according to [1] or [2] or the composition according to [3] into a film or a sheet by a solution casting method.

[8] A laminate including at least one layer formed of a film or sheet containing the methacrylic copolymer according to [1] or [2] or the composition according to [3].

Advantageous Effects of Invention

According to the present invention, it is possible to provide a methacrylic copolymer that has high heat resistance, a positive value of an orientation birefringence, and a negative value of a photoelastic coefficient, and is excellent in compatibility with another resin, and a composition, a film, a sheet, a laminate, and a molded article that contain the copolymer.

Description of Embodiments

(Methacrylic Copolymer)

A methacrylic copolymer of the present invention contains a methyl methacrylate unit, an α-methylstyrene unit, and a structural unit (R). The methacrylic copolymer of the present invention may further contain a copolymerizable monomer unit, a methacrylic acid amide unit represented by the following Formula (A), and a 2-(hydroxyalkyl)acrylic acid ester unit represented by the following Formula (B).

[Chem. 2]

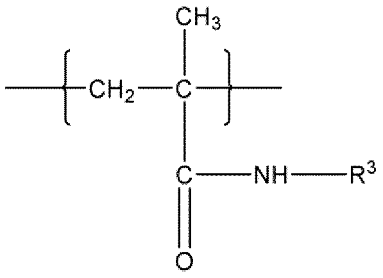

,

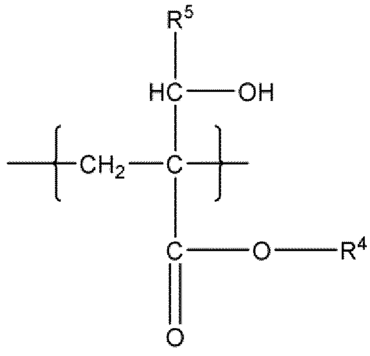

(A) (B)

(In the formula, $R^3$ is a hydrogen atom, an alkyl group having 1 to 18 carbon atoms, a cycloalkyl group having 3 to 12 carbon atoms, or an organic group having an aromatic ring and 6 to 15 carbon atoms, preferably a hydrogen atom, a methyl group, an n-butyl group, a cyclohexyl group, or a benzyl group, and more preferably a methyl group, an n-butyl group, or a cyclohexyl group, and $R^4$ and $R^5$ are each independently a hydrogen atom or an organic group having 1 to 20 carbon atoms, preferably a hydrogen atom or an organic group having 1 to 10 carbon atoms, and more preferably a hydrogen atom or an organic group having 1 to 5 carbon atoms, here, the organic group is not particularly limited as long as it has 1 to 20 carbon atoms, and examples thereof include a linear or branched alkyl group, a linear or branched aryl group, an $-OCOCH_3$ group, and a -CN group, the organic group may contain a heteroatom such as an oxygen atom, and $R^4$ is preferably a methyl group, and $R^5$ is preferably a hydrogen atom.)

In the methacrylic copolymer of the present invention, a proportion of the methyl methacrylate unit is preferably 40 to 87% by mass, more preferably 50 to 85% by mass, and still more preferably 65 to 80% by mass, with respect to all the structural units. When the proportion of the methyl methacrylate unit is less than this range, a total light transmittance of the obtained methacrylic copolymer is deteriorated, and when the proportion of the methyl methacrylate unit is more than the range, heat resistance of the obtained methacrylic copolymer is deteriorated.

In the methacrylic copolymer of the present invention, a proportion of the $\alpha$-methylstyrene unit is preferably 7 to 30% by mass, more preferably 8 to 27% by mass, and still more preferably 11 to 25% by mass, with respect to all the structural units. When the proportion of the $\alpha$-methylstyrene unit is less than this range, a saturated water absorption rate of the obtained methacrylic copolymer is increased. In addition, the methacrylic copolymer in which the proportion of the $\alpha$-methylstyrene unit exceeds 30% by mass has low polymerizability and low productivity.

The structural unit (R) is a structural unit having at least one ring structure in a main chain, the structural unit (R) being selected from the group consisting of a lactone ring unit, a glutaric anhydride unit, and an N-substituted or unsubstituted glutarimide unit. The structural unit may contain a methacrylic acid amide unit represented by Formula (A) and/or a 2-(hydroxyalkyl)acrylic acid ester unit represented Formula (B) in the main chain.

Since a polymer of Comparative Example 3 of the present application formed of 100% of a methyl methacrylate unit has a negative orientation birefringence and a negative photoelastic coefficient, it is apparent that the methyl methacrylate unit contributes to making both the orientation birefringence and the photoelastic coefficient negative.

A polymer of Comparative Example 2 of the present application formed of 90% of a methyl methacrylate unit and 10% of an $\alpha$-methylstyrene unit has a negative orientation birefringence and a negative photoelastic coefficient and has large absolute values of the orientation birefringence and the photoelastic coefficient as compared with the polymer of Comparative Example 3 of the present application formed of 100% of the methyl methacrylate unit, it is apparent that the $\alpha$-methylstyrene unit contributes to making both the orientation birefringence and the photoelastic coefficient negative.

On the other hand, polymers of Examples 1 and 2 containing the structural unit (R) together with the methyl methacrylate unit and the $\alpha$-methylstyrene unit have a positive orientation birefringence and a negative photoelastic coefficient. Furthermore, the polymer of Example 2 having a higher imidization rate proportional to a proportion of the structural unit (R) has a larger numerical value of the orientation birefringence than the polymer of Example 1.

In the methacrylic copolymer of the present invention, the structural unit (R) maintains a negative photoelastic coefficient and greatly contributes to the positive conversion of the orientation birefringence. Since the orientation birefringence is proportional to the structural unit (R), the orientation birefringence can be made positive by appropriately selecting the proportion of the structural unit (R).

One feature of the present invention is that, by introducing the structural unit (R) into a methacrylic copolymer containing a methyl methacrylate unit and an $\alpha$-methylstyrene unit, a methacrylic copolymer that has high heat resistance

and transparency, has a positive value of an orientation birefringence and a negative value of a photoelastic coefficient, can suppress a birefringence of a molded article to a low level, and is excellent in compatibility with another resin can be obtained. A magnitude of a numerical value of each of the orientation birefringence and the photoelastic coefficient can be adjusted by changing a ratio of each of the methyl methacrylate unit, the α-methylstyrene unit, and the structural unit (R).

The lactone ring unit is a structural unit having a >CH-O-C(=O)- group in a ring structure. The number of ring constituting atoms of the structural unit having the >CH-O-C(=O)- group in the ring structure is preferably 4 to 8, more preferably 5 or 6, and most preferably 6 (6-membered ring). Examples of the structural unit having the >CH-O-C(=O)- group in the ring structure can include lactone diyl structural units such as a β-propiolactone diyl structural unit, a γ-butyrolactone diyl structural unit, and a δ-valerolactone diyl structural unit. The structural unit having the >CH-O-C(=O)- group in the ring structure can be obtained, for example, by intramolecular cyclization of a polymer having a hydroxy group and an ester group with a hydroxy group and an ester group. Note that ">C" in the formula means that the carbon atom C has two bonds.

Examples of the δ-valerolactone diyl structural unit can include a structural unit represented by Formula (I).

[Chem. 3]

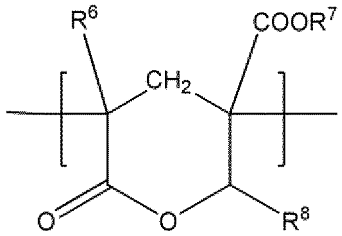

(I)

In Formula (I), $R^6$, $R^7$, and $R^8$ are each independently a hydrogen atom or an organic group having 1 to 20 carbon atoms, preferably a hydrogen atom or an organic group having 1 to 10 carbon atoms, and more preferably a hydrogen atom or an organic group having 1 to 5 carbon atoms. Here, the organic group is not particularly limited as long as it has 1 to 20 carbon atoms, and examples thereof include a linear or branched alkyl group, a linear or branched aryl group, an $-OCOCH_3$ group, and a -CN group. The organic group may contain a heteroatom such as an oxygen atom. Each of $R^6$ and $R^7$ is preferably a methyl group, and $R^8$ is preferably a hydrogen atom.

The lactone ring unit can be contained in the methacrylic copolymer by the method described in JP2000-230016A, JP2001-151814A, JP2002-120326A, JP2002-254544A, JP2005-146084A, or the like, for example, by intramolecular cyclization of a structural unit derived from a 2-(hydroxyalkyl)acrylic acid ester and a structural unit derived from methyl (meth)acrylate. JP2000-230016A, JP2001-151814A, JP2002-120326A, JP2002-254544A, and JP2005-146084A are incorporated herein by reference in their entirety.

The glutaric anhydride unit is a unit having a 2,6-dioxodihydropyrandiyl structure. Examples of the unit having the 2,6-dioxodihydropyrandiyl structure can include a structural unit represented by Formula (II).

[Chem. 4]

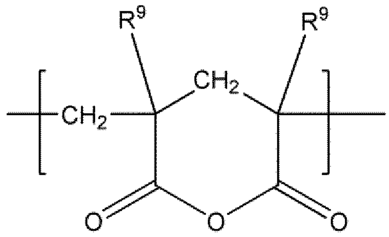

(II)

In Formula (II), $R^9$'s are each independently a hydrogen atom or an alkyl group having 1 to 5 carbon atoms, and is preferably a methyl group.

The unit having the 2,6-dioxodihydropyrandiyl structure can be contained in the methacrylic copolymer by the method described in JP2007-197703A, JP2010-096919A, or the like, for example, by intramolecular cyclization of two adjacent structural units derived from (meth)acrylic acid, intramolecular cyclization of a structural unit derived from (meth)acrylic acid and a structural unit derived from methyl (meth)acrylate, or the like. JP2007-197703A and JP2010-096919A are incorporated herein by reference in their entirety.

The N-substituted or unsubstituted glutarimide unit is a unit having an N-substituted or unsubstituted 2,6-dioxopiperidinediyl structure.

Examples of the unit having the N-substituted or unsubstituted 2,6-dioxopiperidinediyl structure can include a structural unit represented by Formula (1).

[Chem. 5]

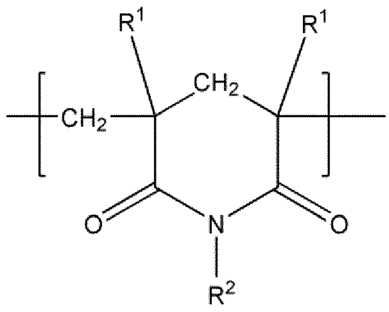

(1)

In Formula (1), $R^1$'s are each independently a hydrogen atom or a methyl group, and is preferably a methyl group. $R^2$ is a hydrogen atom, an alkyl group having 1 to 18 carbon atoms, a cycloalkyl group having 3 to 12 carbon atoms, or an organic group having an aromatic ring and 6 to 15 carbon atoms, preferably a hydrogen atom, a methyl group, an n-butyl group, a cyclohexyl group, or a benzyl group, and more preferably a methyl group, an n-butyl group, or a cyclohexyl group.

The structural unit represented by Formula (1) may be produced, for example, by a reaction of a corresponding acid anhydride (IIa) with an imidizing agent represented by $NH_2R^2$ as shown in Scheme (i), or may be produced by an intramolecular cyclization reaction of a copolymer having a partial structure of Formula (C). It is preferable to perform heating in order to convert the structural unit represented by Formula (A) into the structural unit represented by Formula (1) by the intramolecular cyclization reaction.

Scheme (i)

[Chem. 6]

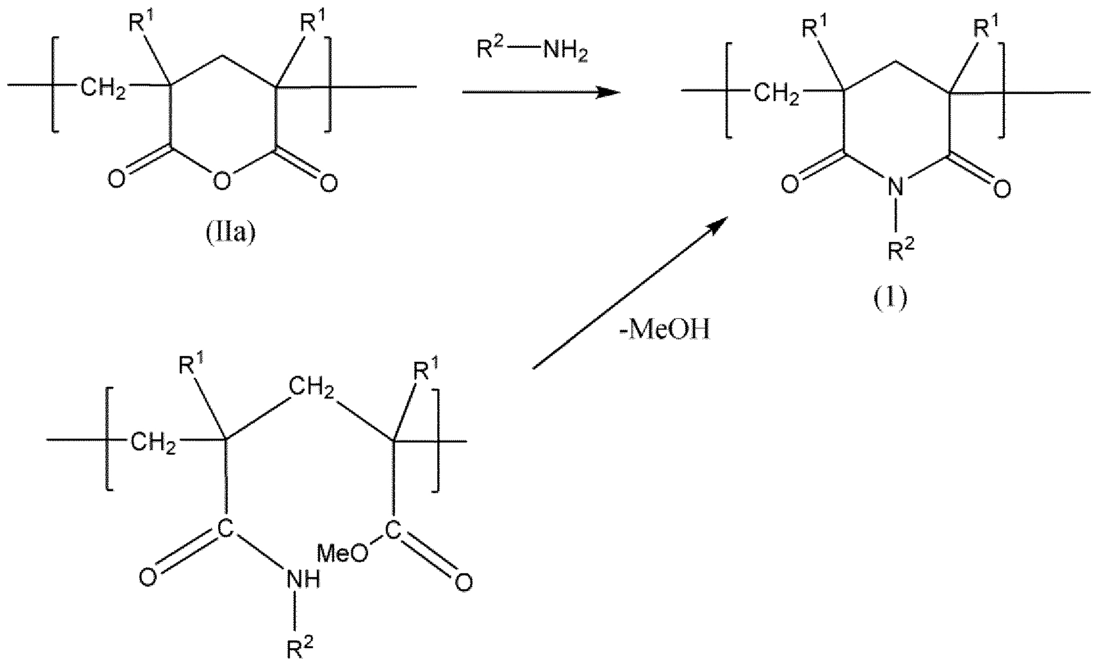


(IIa)

(1)

(C)

(In the formula, $R^1$ and $R^2$ are as defined above.)

The N-substituted or unsubstituted glutarimide unit can be obtained by the method described in WO2005/10838A1, JP2010-254742A, JP2008-273140A, JP2008-274187A, or the like, specifically, by reacting two adjacent structural units derived from methyl methacrylate or glutaric anhydride units with an imidizing agent, for example, an aliphatic hydrocarbon group-containing amine such as ammonia, methylamine, ethylamine, n-propylamine, isopropylamine, n-butylamine, isobutylamine, tert-butylamine, or n-hexylamine; an aromatic hydrocarbon group-containing amine such as aniline, toluidine, or trichloroaniline; an alicyclic hydrocarbon group-containing amine such as cyclohexylamine; urea, 1,3-dimethylurea, 1,3-diethylurea, or 1,3-dipropylurea. Among them, methylamine is preferable. Two adjacent structural units derived from methyl methacrylate or a glutaric anhydride unit may be reacted with an imidizing agent, and then reacted with a dialkyl carbonate ester such as dimethyl carbonate to form a carboxylic acid such as methacrylic acid into an alkyl methacrylate ester such as methyl methacrylate. The carboxylic acid can be produced when a carboxylic acid and an amide are generated by hydrolysis of a methacrylic acid ester or a glutaric anhydride unit represented by Formula (II), a reaction of a glutaric anhydride unit represented by Formula (II) with an imidizing agent, or the like. A reaction of dimethyl carbonate may be performed in the presence of a tertiary amine such as triethylamine. WO2005/10838A1, JP2010-254742A, JP2008-273140A, and JP2008-274187A are incorporated herein by reference in their entirety.

In the methacrylic copolymer of the present invention, the proportion of the structural unit (R) is preferably 6 to 30% by mass, more preferably 7.5 to 25% by mass, and still more preferably 8 to 25% by mass, with respect to all the structural units. The orientation birefringence of the methacrylic copolymer can be changed by changing a ratio of the structural unit (R) to methyl methacrylate. In addition, as a content of the structural unit (R) is increased, the methacrylic copolymer has improved heat resistance, but pliability, compatibility with another copolymer, and molding processability of the methacrylic copolymer tend to be deteriorated. When the proportion of the structural unit (R) with respect to all the structural units is within the above range, a methacrylic copolymer that has high heat resistance and transparency, has a positive value of an orientation birefringence and a negative value of a photoelastic coefficient, can reduce a birefringence of a molded article, and is excellent in compatibility with another resin can be obtained, which is preferable.

In one preferred embodiment of the present invention, the methacrylic copolymer of the present invention may contain each of the methacrylic acid amide unit represented by Formula (A) and the 2-(hydroxyalkyl)acrylic acid ester unit represented Formula (B) in an amount of preferably 0 to 2% by mass, more preferably 0 to 1.5% by mass, still more preferably 0 to 1.0% by mass, and most preferably 0 to 0.5% by mass, with respect to all the structural units. When the amount of the structural unit of Formula (A) and/or (B) exceeds the above range, the saturated water absorption rate of the obtained methacrylic copolymer is increased, or a crosslinked body is formed at the time of molding, such that a foreign matter defect occurs and appearance quality is deteriorated.

The methacrylic copolymer of the present invention may contain a structural unit (O) in addition to the methyl methacrylate unit, the $\alpha$-methylstyrene unit, and the structural unit (R). Examples of the structural unit (O) can include a unit derived from a vinyl-based monomer having only one polymerizable carbon-carbon double bond in one molecule, such as (meth)acrylamide, (meth)acrylonitrile, (meth)acrylic acid, or styrene, a structural unit represented by Formula (A), and a structural unit represented by Formula (B). In the methacrylic copolymer of the present invention, a proportion of the structural unit (O) is preferably 10% by mass or less with respect to all the structural units. Note that the proportions of the methyl methacrylate unit, the $\alpha$-methylstyrene unit, the structural unit (R), and the structural unit (O) can be measured by $^1$H-NMR or the like.

A weight average molecular weight (Mw) of the methacrylic copolymer of the present invention is preferably 40,000 to 200,000, more preferably 50,000 to 180,000, and still more preferably 55,000 to 160,000. When the Mw is 40,000 or more, strength, toughness, and the like of the molded article of the present invention are improved. When the Mw is 200,000 or less, fluidity of the methacrylic copolymer of the present invention is improved, and molding processability is improved.

The weight average molecular weight (Mw) is a value calculated by converting a chromatogram measured by gel permeation chromatography into a molecular weight of standard polystyrene.

An acid value of the methacrylic copolymer of the present invention is preferably 0.01 to 0.30 mmol/g and more preferably 0.05 to 0.28 mmol/g. The acid value is a value proportional to the content of the carboxylic acid unit and the carboxylic anhydride unit in the methacrylic copolymer. The acid value can be calculated, for example, by the method described in JP2005-023272A. When the acid value is within the above range, a balance among heat resistance, mechanical properties, and molding processability is excellent.

A lower limit of the glass transition temperature of the methacrylic copolymer of the present invention is preferably 120°C, more preferably 121°C, and still more preferably 122°C, and an upper limit of the glass transition temperature of the methacrylic copolymer of the present invention is not particularly limited, and is preferably 160°C. As the glass transition temperature of the methacrylic copolymer is increased, the molded article containing the methacrylic copolymer is less likely to be deformed and shrunk by heat, that is, has higher heat resistance.

Herein, the "glass transition temperature (Tg)" is measured in accordance with JIS K7121. Specifically, the temperature is once raised to 230°C, cooling is then performed to room temperature, and thereafter, a DSC curve is

measured under a condition in which the temperature is raised from room temperature to 230°C at 10 °C/min. The midpoint obtained from the DSC curve measured at the time of the second temperature rise is determined as the "glass transition temperature (Tg)".

In the methacrylic copolymer of the present invention, the sign of the photoelastic coefficient measured by a method described below is preferably negative, and at the same time, the sign of the orientation birefringence measured by a method described below is preferably positive. In a case where such a methacrylic copolymer is contained in the molded article, it is easy to provide a molded article having low birefringence.

A lower limit of the orientation birefringence is preferably $0.1 \times 10^{-4}$, more preferably $0.5 \times 10^{-4}$, and still more preferably $1.0 \times 10^{-4}$, and an upper limit of the orientation birefringence is not particularly limited, and is preferably $2.0 \times 10^{-3}$.

An upper limit of the photoelastic coefficient is preferably $-0.1 \times 10^{-12}$/Pa, more preferably $-0.2 \times 10^{-12}$/Pa, and still more preferably $-0.5 \times 10^{-12}$/Pa, and a lower limit of the photoelastic coefficient is not particularly limited, and is preferably $-2.0 \times 10^{-11}$/Pa.

The present inventors consider a reduction of the orientation birefringence and a reduction of the stress birefringence as another problem. The methacrylic copolymer of the present invention contributes to suppressing the orientation birefringence and the photoelastic coefficient (or stress birefringence) of the resin composition to be zero or low when alloyed with another resin having opposite birefringence signs.

The photoelastic coefficient is a slope calculated when a relationship between measured stress and birefringence is approximated to a linear function by a least squares method by applying tension to a press-molded sheet formed of a methacrylic copolymer with a size of 15 mm in width × 60 mm in length × 1.0 mm in thickness at a distance between chucks of 45 mm and a temperature of 23°C while increasing the tension from 0 N to 100 N by 10 N and measuring a birefringence at the central portion of the sheet at a temperature of 23°C and a D-line wavelength of Na each time the tension is increased. Note that the stress is a value obtained by dividing the tension by a sheet cross-sectional area. The sheet cross-sectional area is calculated as a product of the sheet width of 15 mm and the thickness at the measurement point of the central portion of the sheet. The birefringence is defined as a difference ($\Delta n = n_p - n_o$) between a refractive index $n_p$ of light having a polarization plane parallel to a tension direction and a refractive index $n_o$ of light having a polarization plane perpendicular to the tension direction.

The orientation birefringence is a birefringence measured at a temperature of 23°C and a D-line wavelength of Na without applying tension to the central portion of a stretched film obtained by stretching a press-molded sheet formed of a methacrylic copolymer with a size of 20 mm in width × 40 mm in length × 1.0 mm in thickness by 100% in one direction at a rate of 3 mm/min and a temperature higher than the glass transition temperature by 10°C. Since the methacrylic copolymer of the present invention has a positive orientation birefringence and a negative photoelastic coefficient, and a magnitude of each of the orientation birefringence and the photoelastic coefficient can be adjusted, an orientation birefringence and a photoelastic birefringence of a molded product to be obtained can be reduced by blending the methacrylic copolymer with another resin having an opposite sign of an orientation birefringence or a photoelastic coefficient, for example, a styrene-acrylonitrile copolymer (orientation birefringence: negative, photoelastic coefficient: positive), polymethyl methacrylate (orientation birefringence: negative, photoelastic coefficient: negative), polybenzyl methacrylate (orientation birefringence: positive, photoelastic coefficient: positive), or the like at an arbitrary proportion.

The methacrylic copolymer of the present invention can be obtained by a method including performing a ring structure forming reaction on a copolymer (hereinafter, may be referred to as a precursor polymer) of methyl methacrylate and α-methylstyrene.

That is, the methacrylic copolymer of the present invention can be obtained by a production method including:

a step of continuously supplying, to a tank-type reactor, a reaction raw material containing a monomer mixture containing 70 to 93% by mass of methyl methacrylate, 30 to 7% by mass of α-methylstyrene, and 0 to 10% by mass of a copolymerizable monomer, a radical polymerization initiator, and if necessary, a chain transfer agent;
a step of performing bulk polymerization of the monomer mixture in the tank-type reactor at a polymerization conversion rate of up to 30 to 60% by mass to obtain a reaction product;
a step of removing the monomer mixture in the reaction product; and
a step of performing a ring structure forming reaction on the obtained precursor polymer.

The precursor polymer is polymerized from the reaction raw material containing a monomer mixture, a radical polymerization initiator, and if necessary, a chain transfer agent, and the monomer mixture contains the methyl methacrylate in an amount of 70 to 93% by mass and preferably 75 to 90% by mass. In addition, the α-methylstyrene is contained in an amount of 30 to 7% by mass and preferably 25 to 10% by mass.

The copolymerizable monomer is contained in an amount of 0 to 10% by mass and preferably 0 to 5% by mass.

The monomer mixture may contain monomers other than the methyl methacrylate and the α-methylstyrene.

Examples of the monomer include vinyl monomers having only one polymerizable alkenyl group in one molecule, such as a methacrylic acid alkyl ester other than methyl methacrylate such as ethyl methacrylate or butyl methacrylate; a methacrylic acid aryl ester such as phenyl methacrylate; a methacrylic acid cycloalkyl ester such as cyclohexyl methacrylate or norbornenyl methacrylate; an acrylic acid aryl ester such as phenyl acrylate; an acrylic acid cycloalkyl ester such as cyclohexyl acrylate or norbornenyl acrylate; an aromatic vinyl monomer such as styrene; acrylamide; methacrylamide; acrylonitrile; and methacrylonitrile. A content of the monomers other than the methyl methacrylate and acrylic acid alkyl ester in the monomer mixture is preferably 10% by mass or less and more preferably 5% by mass or less.

The monomer mixture may contain monomers other than the methyl methacrylate and the α-methylstyrene. Examples of the monomer include vinyl monomers having only one polymerizable alkenyl group in one molecule, such as a methacrylic acid alkyl ester other than methyl methacrylate such as ethyl methacrylate or butyl methacrylate; a methacrylic acid aryl ester such as phenyl methacrylate; a methacrylic acid cycloalkyl ester such as cyclohexyl methacrylate or norbornenyl methacrylate; an acrylic acid aryl ester such as phenyl acrylate; an acrylic acid cycloalkyl ester such as cyclohexyl acrylate or norbornenyl acrylate; an aromatic vinyl monomer such as styrene; acrylamide; methacrylamide; acrylonitrile; and methacrylonitrile. A content of the monomers other than the methyl methacrylate and acrylic acid alkyl ester in the monomer mixture is preferably 10% by mass or less and more preferably 5% by mass or less.

In the monomer mixture, b* is preferably -1 to 2 and more preferably -0.5 to 1.5. When b* is within this range, it is advantageous in obtaining a molded product having almost no coloration with high production efficiency when the obtained methacrylic copolymer is molded. Note that b* is a value measured in accordance with International Commission on Illumination (CIE) Standard (1976) or JIS Z-8722.

The monomer mixture removed from the reaction product by the step of removing the monomer mixture in the reaction product can be recovered and used again in the present invention. In a case where b* of the recovered monomer mixture is increased by heat applied at the time of recovery or the like, it is preferable to purify the monomer mixture by an appropriate method to set b* within the above range.

The polymerization initiator used in the present invention is not particularly limited as long as it generates a reactive radical. For example, t-hexylperoxyisopropyl monocarbonate, t-hexylperoxy 2-ethylhexanoate, 1,1,3,3-tetramethylbutylperoxy 2-ethylhexanoate, t-butylperoxy pivalate, t-hexylperoxy pivalate, t-butylperoxy neodecanoate, t-hexylperoxy neodecanoate, 1,1,3,3-tetramethylbutylperoxy neodecanoate, 1,1-bis(t-hexylperoxy) cyclohexane, benzoyl peroxide, 3,5,5-trimethylhexanoyl peroxide, lauroyl peroxide, 2,2'-azobis(2-methylpropionitrile), 2,2'-azobis(2-methylbutyronitrile), and dimethyl 2,2'-azobis(2-methylpropionate) are preferable. Examples of the polymerization initiator include t-hexylperoxy 2-ethylhexanoate, 1,1-bis(t-hexylperoxy) cyclohexane, and dimethyl 2,2'-azobis(2-methylpropionate).

It is desirable that the polymerization initiator used in the present invention has an average uncleaved initiator concentration (I) at a polymerization temperature in the tank-type reactor described below within a range of $5.1 \times 10^{-5}$ to $2.4 \times 10^{-4}$ (mol/L) .

The amount of the polymerization initiator used is adjusted to the polymerization temperature, and the polymerization initiator is added to the monomer mixture to have the initiator concentration (I).

Examples of the chain transfer agent used in the present invention include alkyl mercaptans such as n-octyl mercaptan, n-dodecyl mercaptan, t-dodecyl mercaptan, 1,4-butanedithiol, 1,6-hexanedithiol, ethylene glycol bisthiopropionate, butanediol bisthioglycolate, butanediol bisthiopropionate, hexanediol bisthioglycolate, hexanediol bisthiopropionate, trimethylolpropane tris-(β-thiopropionate), and pentaerythritol tetrakisthiopropionate; and terpinolene.

Among them, monofunctional alkyl mercaptans such as n-octyl mercaptan and n-dodecyl mercaptan are preferable. These chain transfer agents can be used alone or in combination of two or more thereof. The amount of the chain transfer agent used is preferably 0 to 1 part by mass, more preferably 0.01 to 0.8 parts by mass, and still more preferably 0.02 to 0.6 parts by mass, with respect to 100 parts by mass of the monomer mixture.

In the bulk polymerization, a solvent is not used in principle, but in a case where it is required to adjust a viscosity of a reaction solution, a solvent can be contained in the monomer mixture. The solvent is preferably an aromatic hydrocarbon such as benzene, toluene, or ethylbenzene. These solvents can be used alone or in combination of two or more thereof. The amount of the solvent used is preferably 30 parts by mass or less and more preferably 10 parts by mass or less with respect to 100 parts by mass of the monomer mixture.

In the reaction raw material used in the present invention, the amount of dissolved oxygen is preferably 10 ppm or less, more preferably 5 ppm or less, still more preferably 4 ppm or less, and most preferably 3 ppm or less. When the amount of dissolved oxygen is within such a range, the polymerization reaction is allowed to smoothly proceed, and a molded product having no silver streak or coloration is easily obtained.

The temperature in the tank-type reactor, that is, the temperature of the solution in the reactor, is preferably 110 to 140°C and more preferably 114 to 135°C. When the temperature is higher than this range, it is difficult to produce a high-molecule-weight compound containing α-methylstyrene, which causes deterioration of heat resistance.

In the production method of the methacrylic copolymer of the present invention, a water content in the reaction solution in the tank-type reactor is preferably 1,000 ppm or less, more preferably 700 ppm or less, and still more preferably 280 ppm or less. By setting the water content to 1,000 ppm or less, it is possible to suppress generation of resin foreign

matters having a size of several um to several tens of μm during the polymerization reaction, and it is possible to significantly reduce occurrence of defects having an outer diameter of several tens of μm centered on the resin foreign matters when the obtained methacrylic copolymer is formed into a film or a sheet by melt-molding.

In the tank-type reactor, the bulk polymerization is preferably performed until the polymerization conversion rate reaches 30 to 65% by mass and preferably 35 to 60% by mass.

In addition, an average retention time (0) of the reaction raw material in the tank-type reactor is preferably 1.5 to 5 hours, more preferably 2 to 4.5 hours, and still more preferably 2.5 to 4 hours. When the average retention time is too short, the amount of the polymerization initiator required is increased. In addition, the increase in the amount of the polymerization initiator makes it difficult to control the polymerization reaction and tends to make it difficult to control the molecular weight. On the other hand, when the average retention time is too long, it takes time until the reaction becomes a steady state, and productivity tends to be decreased. The average retention time can be adjusted by a capacity of the tank-type reactor and the amount of the reaction raw material supplied.

The bulk polymerization is preferably performed in an inert gas atmosphere such as nitrogen gas.

The production method of the present invention includes a step of removing the monomer mixture in the reaction product. Here, the reaction product is not limited to the reaction product obtained by bulk polymerization in the tank-type reactor, and may be a reaction product obtained in another reactor optionally connected to the post stage of the tank-type reactor, that is, a reaction product having a high polymerization conversion rate and obtained by further polymerizing, in another reactor, the unreacted monomer mixture in the reaction product obtained by bulk polymerization in the tank-type reactor. In addition, in this step, the solvent is also removed at the same time, if necessary. The removal method is not particularly limited and is preferably a thermal devolatilization method. Examples of the thermal devolatilization include an equilibrium flash evaporation method and an adiabatic flash evaporation method, and an adiabatic flash evaporation method is preferable. The temperature at which the adiabatic flash evaporation method is performed is preferably 200 to 280°C, more preferably 220 to 280°C, and still more preferably 220 to 270°C. When the temperature at which the adiabatic flash evaporation method is performed is lower than 200°C, it takes time to devolatilize, and the devolatilization becomes insufficient, which may cause appearance defects such as silver streaks in the molded product. On the other hand, when the temperature at which the adiabatic flash evaporation method is performed is higher than 280°C, the methacrylic copolymer tends to be colored and undergo a depolymerization reaction due to oxidation, burning, decomposition, or the like. The adiabatic flash evaporation method may be performed in multiple stages. In this case, the reaction product flowing through a heat transfer tube can be heated by the vapor of the flash-evaporated monomer mixture, and the heated reaction product can be supplied into a low-pressure flash tank to be flash-evaporated. The reaction product can be pressurized by a pump or the like. After the monomer mixture is removed, the methacrylic copolymer can be formed into pellets or powder particles according to a known method in order to facilitate handling as a molding material. A content of the monomer mixture in the methacrylic copolymer obtained in the present invention is preferably 1% by mass or less and more preferably 0.5% by mass or less.

A lower limit of a glass transition temperature of the precursor polymer is preferably 114°C, more preferably 115°C, and still more preferably 117°C, and an upper limit of the glass transition temperature of the precursor polymer is preferably 150°C. The glass transition temperature can be changed by adjusting the molecular weight, the α-methylstyrene copolymerization amount, and the like. As the glass transition temperature of the precursor polymer is higher, the heat resistance is more improved. A methacrylic copolymer obtained using a precursor polymer having a high glass transition temperature has high heat resistance even when the amount of the structural unit (R) is small. Therefore, the methacrylic copolymer hardly causes deterioration of the saturated water absorption rate or the like.

The precursor polymer is not particularly limited as long as the total content of the structural unit derived from methyl methacrylate is 70 to 93% by mass and the total content of the structural unit derived from α-methylstyrene is 30 to 7% by mass. From the viewpoint of polymerizability, transparency, and the like, the total content of the structural unit derived from methyl methacrylate in the precursor polymer is preferably 73% by mass or more and 93% by mass or less, more preferably 75% by mass or more and 92% by mass or less, and most preferably 80% by mass or more and 92% by mass or less.

From the viewpoint of heat resistance, polymerizability, a water absorption rate, and the like, the total content of the structural unit derived from α-methylstyrene in the precursor polymer is preferably 7% by mass or more and 27% by mass or less and more preferably 8% by mass or more and 25% by mass or less. When the content of the structural unit derived from α-methylstyrene is less than this range, sufficient heat resistance cannot be obtained, and when the content of the structural unit derived from α-methylstyrene is more than this range, polymerizability is remarkably deteriorated.

The precursor polymer has a weight average molecular weight Mw in terms of polystyrene of preferably 30,000 or more and 200,000 or less, more preferably 40,000 or more and 180,000 or less, and still more preferably 50,000 or more and 160,000 or less, in a chromatogram obtained by gel permeation chromatography. When the weight average molecular weight Mw is smaller than this range, the obtained molded article is brittle, and when the weight average molecular weight Mw is higher than this range, productivity is deteriorated. The Mw can be controlled by adjusting the

type, amount, addition time, and the like of the polymerization initiator or the chain transfer agent (optional component) used in the production of the precursor polymer.

The ring structure forming reaction can be performed, for example, using an extruder. Examples of the extruder include a single-screw extruder, a twin-screw extruder, and a multi-screw extruder. A twin-screw extruder is preferable from the viewpoint of mixing performance. The twin-screw extruder includes a non-intermeshing co-rotating twin-screw extruder, an intermeshing co-rotating twin-screw extruder, a non-intermeshing counter-rotating twin-screw extruder, and an intermeshing counter-rotating twin-screw extruder. The intermeshing counter-rotating twin-screw extruder is preferable because it can rotate at a high speed and can efficiently promote mixing. These extruders may be used alone or may be serially connected to each other.

In the ring structure forming reaction using an extruder, for example, a precursor polymer as a raw material is fed through a raw material feeding part of the extruder, the precursor polymer is melted to fill the inside of a cylinder, and then, an imidizing agent (optional component) and the like are injected into the extruder using an addition pump, such that the ring structure forming reaction can be allowed to proceed in the extruder. When an imidizing agent is used, as the structural unit (R), an N-substituted or unsubstituted glutarimide unit may be produced, and if necessary, a lactone ring unit and/or a glutaric anhydride unit may be produced. In a case where an imidizing agent is not used, as the structural unit (R), a lactone ring unit and/or a glutaric anhydride unit is produced. A preferred imidizing agent is represented by $R^2$-$NH_2$ ($R^2$ is as defined above). The imidizing agent is used in an amount of 1.6 to 12 parts by mass with respect to 100 parts by mass of the methacrylic copolymer. When the amount of the imidizing agent used is within the above range, by-production of the methacrylic acid amide unit can be suppressed.

A resin temperature in a reaction zone in the extruder is preferably in a range of 180 to 280°C and more preferably in a range of 200 to 280°C. When the resin temperature in the reaction zone is lower than 180°C, the heat resistance of the methacrylic copolymer tends to be deteriorated due to a decrease in reaction efficiency of the ring structure forming reaction, by-production of the methacrylic acid amide unit, and the like. When the resin temperature in the reaction zone is higher than 280°C, decomposition of the resin becomes significant, and mechanical strength such as tensile breaking strength of a molded article and film formed of the obtained methacrylic copolymer tends to be deteriorated. Note that the reaction zone in the extruder refers to a region from an injection position of an imidizing agent or the like to a resin discharge port (die part) in the cylinder of the extruder.

By increasing the retention time in the reaction zone of the extruder, the ring structure forming reaction can be allowed to proceed. The retention time in the reaction zone of the extruder is preferably longer than 10 seconds and more preferably longer than 30 seconds. When the retention time is 10 seconds or shorter, the ring structure forming reaction may hardly proceed.

A resin pressure in the extruder is preferably in a range of atmospheric pressure to 50 MPa and more preferably in a range of 1 to 30 MPa. When the resin pressure exceeds 50 MPa, the resin pressure exceeds the limit of the mechanical pressure of a normal extruder, and a special apparatus is required, which is not preferably in terms of cost.

It is preferable to use an extruder having a vent hole capable of reducing the pressure to atmospheric pressure or less. According to such a configuration, unreacted substances, byproducts such as methanol, or monomers can be removed, and breaking strength of a molded article containing the methacrylic copolymer of the present invention tends to be improved.

In the ring structure forming reaction, an appropriate reactor for high-viscosity materials manufactured by Sumitomo Heavy Industries, Ltd., for example, a horizontal twin-screw reactor such as BIVOLAK or a vertical twin-screw stirring tank such as SUPERBLEND can be preferably used instead of the extruder.

During the ring structure forming reaction, a carboxy group may be produced as a by-product in the methacrylic copolymer. The carboxy group may be converted into an ester group by an esterifying agent, a catalyst, or the like, if necessary. This makes it possible to reduce foaming of the resin when an optical film is produced. Such an ester group varies depending on an esterifying agent or a catalyst to be used, and from the viewpoint of reduction in resin melt viscosity during melt-molding, reactivity of esterification, and heat resistance of the resin after esterification, it is preferable to contain a methyl methacrylate unit, and it is more preferable to contain both a methyl methacrylate unit and an ethyl methacrylate unit.

As the esterifying agent, dimethyl carbonate is preferable from the viewpoint of cost, reactivity, and the like.

The amount of the esterifying agent used can be set, for example, so that the acid value of the methacrylic copolymer becomes a desired value.

In addition to the esterifying agent, a catalyst can also be used in combination. The type of the catalyst is not particularly limited, and examples thereof include amine-based compounds such as trimethylamine, triethylamine, monomethyldiethylamine, and dimethylmonoethylamine. Among them, trimethylamine is preferable from the viewpoint of cost, reactivity, and the like.

In general, additives used in the resin composition may be contained in a range in which the object of the present invention is not impaired. Examples of the additives include a filler, an antioxidant, a heat deterioration inhibitor, an ultraviolet absorber, a light stabilizer, a lubricant, a release agent, a polymer processing aid, an antistatic agent, a

flame retardant, a coloring agent, a dye, a pigment, a light diffusing agent, an organic dye, a delustering agent, an impact resistance modifier, and a fluorescent substance. The total amount of such additives other than the filler is preferably 7% by mass or less, more preferably 5% by mass or less, and still more preferably 4% by mass or less.

The antioxidant is effective in preventing oxidative deterioration of the resin by itself in the presence of oxygen. Examples of the antioxidant can include a phosphorus-based antioxidant, a hindered phenol-based antioxidant, and a thioether-based antioxidant. These antioxidants may be used alone or in a combination of two or more thereof.

The heat deterioration inhibitor can prevent heat deterioration of the resin by scavenging a polymer radical generated when exposed to high heat in a substantially oxygen-free state.

Examples of the heat deterioration inhibitor can include 2-tert-butyl-6-(3'-tert-butyl-5'-methyl-hydroxybenzyl)-4-methylphenyl acrylate (manufactured by Sumitomo Chemical Co., Ltd., trade name: Sumilizer GM), and 2,4-di-tert-amyl-6-(3',5'-di-tert-amyl-2'-hydroxy-$\alpha$-methylbenzyl)phenylacrylate (manufactured by Sumitomo Chemical Co., Ltd., trade name: Sumilizer GS).

The ultraviolet absorber is a compound having an ability to absorb ultraviolet rays. The ultraviolet absorber is a compound having a function of mainly converting light energy into heat energy.

Examples of the ultraviolet absorber can include benzophenones, benzotriazoles, triazines, benzoates, salicylates, cyanoacrylates, oxalic anilides, malonic acid esters, and formamidines. These ultraviolet absorbers may be used alone or in a combination of two or more thereof. Among them, benzotriazoles, triazines, or an ultraviolet absorber having a maximum value $\varepsilon_{max}$ of a molar absorption coefficient at a wavelength of 380 to 450 nm of 1,200 $dm^3 \cdot mol^{-1}cm^{-1}$ or less is preferable.

Since benzotriazoles have a high effect of suppressing deterioration of optical properties such as coloring due to ultraviolet rays, the benzotriazoles are preferable as an ultraviolet absorber used when the molded article of the present invention is applied to optical applications. As the benzotriazoles, 2-(2H-benzotriazol-2-yl)-4-(1,1,3,3-tetramethylbutyl)phenol (manufactured by BASF SE; trade name: TINUVIN329), 2-(2H-benzotriazol-2-yl)-4,6-bis(1-methyl-1-phenylethyl)phenol (manufactured by BASF SE; trade name: TINUVIN234), 2,2'-methylenebis[6-(2H-benzotriazol-2-yl)-4-tert-octylphenol] (manufactured by ADEKA Corporation; trade name: LA-31), 2-(5-octylthio-2H-benzotriazol-2-yl)-6-tert-butyl-4-methylphenol, and the like are preferable.

In addition, the ultraviolet absorber having a maximum value $\varepsilon_{max}$ of a molar absorption coefficient at a wavelength of 380 to 450 nm of 1,200 $dm^3.mol^{-1}cm^{-1}$ or less can suppress yellowness of the obtained molded article. Examples of such an ultraviolet absorber can include 2-ethyl-2'-ethoxy-oxalanilide (manufactured by Clariant Japan K.K.; trade name: Sanduvor VSU). Among these ultraviolet absorbers, benzotriazoles are preferably used from the viewpoint of suppressing resin deterioration due to ultraviolet rays.

In addition, in a case where it is desired to efficiently absorb a short wavelength of 380 nm or less, a triazine ultraviolet absorber is preferably used. Examples of such an ultraviolet absorber can include 2,4,6-tris(2-hydroxy-4-hexyloxy-3-methylphenyl)-1,3,5-triazine (manufactured by ADEKA Corporation; trade name: LA-F70), a hydroxyphenyltriazine-based ultraviolet absorber that is an analog thereof (manufactured by BASF SE; trade name: TINUVIN477, TINUVIN460, or TINUVIN479), and 2,4-diphenyl-6-(2-hydroxy-4-hexyloxyphenyl)-1,3,5-triazine.

Furthermore, in a case where it is desired to particularly effectively absorb light having a wavelength of 380 to 400 nm, a metal complex having a ligand having a heterocyclic structure disclosed in WO2011/089794A1, WO2012/124395A1, JP2012-012476A, JP2013-023461A, JP2013-112790A, JP2013-194037A, JP2014-062228A, JP2014-088542A, JP2014-088543A, or the like is preferably used as an ultraviolet absorber. WO2011/089794A1, WO2012/124395A1, JP2012-012476A, JP2013-023461A, JP2013-112790A, JP2013-194037A, JP2014-062228A, JP2014-088542A, and JP2014-088543A are incorporated herein by reference in their entirety.

Examples of the ligand having a heterocyclic structure include 2,2'-iminobisbenzothiazole, 2-(2-benzothiazolylamino)benzoxazole, 2-(2-benzothiazolylamino)benzimidazole, (2-benzothiazolyl) (2-benzoimidazolyl)methane, bis(2-benzoxazolyl)methane, bis(2-benzothiazolyl)methane, bis[2-(N-substituted)benzoimidazolyl]methane, and derivatives thereof. As the central metal of such a metal complex, copper, nickel, cobalt, and zinc are preferably used. In addition, in order to use these metal complexes as ultraviolet absorbers, it is preferable to disperse the metal complex in a medium such as a low-molecular-compound or a polymer. The amount of the metal complex added is preferably 0.01 to 5 parts by mass and more preferably 0.1 to 2 parts by mass with respect to 100 parts by mass of the molded article of the present invention. Since the metal complex has a large molar absorption coefficient at a wavelength of 380 to 400 nm, the amount of the metal complex to be added is small in order to obtain a sufficient ultraviolet absorbing effect. When the addition amount is reduced, deterioration of the appearance of the molded article due to bleeding out or the like can be suppressed. In addition, since the metal complex has high heat resistance, deterioration or decomposition during molding processing is small. Furthermore, since the metal complex has high light resistance, ultraviolet absorbing performance can be held for a long period of time.

Note that the maximum value $\varepsilon_{max}$ of the molar absorption coefficient of the ultraviolet absorber is measured as follows. 10.00 mg of an ultraviolet absorber is added to 1 L of cyclohexane and dissolved so that there is no undissolved matter when visually observed. This solution is injected into a quartz glass cell with a size of 1 cm $\times$ 1 cm $\times$ 3 cm, and

an absorbance at a wavelength of 380 to 450 nm is measured using a spectrophotometer (manufactured by Hitachi, Ltd.; trade name: U-3410). The maximum value $\varepsilon_{max}$ of the molar absorption coefficient is calculated by the following equation using a molecular weight ($M_{UV}$) of the ultraviolet absorber and a maximum value ($A_{max}$) of the measured absorbance.

$$\varepsilon_{max} = [A_{max}/(10 \times 10^{-3})] \times M_{UV}$$

The light stabilizer is a compound having a function of scavenging a radical mainly generated by oxidation with light. Examples of a preferred light stabilizer can include hindered amines such as a compound having a 2,2,6,6-tetra-alkyl-piperidine skeleton.

Examples of the lubricant include stearic acid, behenic acid, stearoamide acid, methylenebisstearoamide, triglyceride hydroxystearate, paraffin wax, ketone wax, octyl alcohol, and hardened oil.

Examples of the release agent can include higher alcohols such as cetyl alcohol and stearyl alcohol; and glycerin higher fatty acid esters such as stearic acid monoglyceride and stearic acid diglyceride. In the present invention, it is preferable to use higher alcohols and a glycerin fatty acid monoester in combination as the release agent. In a case where the higher alcohols and the glycerin fatty acid monoester are used in combination, a ratio thereof is not particularly limited, and the amount of the higher alcohols used: the amount of the glycerin fatty acid monoester used is preferably 2.5:1 to 3.5:1 and more preferably 2.8:1 to 3.2:1 in terms of mass ratio.

As the polymer processing aid, polymer particles (non-crosslinked rubber particles) having a particle diameter of 0.05 to 0.5 μm, which can be produced by an emulsion polymerization method, are usually used. The polymer particles may be single layer particles formed of a polymer having a single composition ratio and a single intrinsic viscosity, or may be multilayer particles formed of two or more polymers having different composition ratios or intrinsic viscosities.

Examples of the antistatic agent include alkylsulfonic acid salts such as sodium heptyl sulfonate, sodium octyl sulfonate, sodium nonyl sulfonate, sodium decyl sulfonate, sodium dodecyl sulfonate, sodium cetyl sulfonate, sodium octadecyl sulfonate, sodium diheptyl sulfonate, potassium heptyl sulfonate, potassium octyl sulfonate, potassium nonyl sulfonate, potassium decyl sulfonate, potassium dodecyl sulfonate, potassium cetyl sulfonate, potassium octadecyl sulfonate, potassium diheptyl sulfonate, lithium heptyl sulfonate, lithium octyl sulfonate, lithium nonyl sulfonate, lithium decyl sulfonate, lithium dodecyl sulfonate, lithium cetyl sulfonate, lithium octadecyl sulfonate, and lithium diheptyl sulfonate.

Examples of the flame retardant include a metal hydrate having a hydroxyl group or crystalline water, such as magnesium hydroxide, aluminum hydroxide, hydrated aluminum silicate, hydrated magnesium silicate, or hydrotalcite, a phosphoric acid compound such as polyphosphoric acid amine or phosphoric acid ester, and a silicon compound, and a phosphoric acid-based flame retardant such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, dimethylethyl phosphate, methyldibutyl phthalate, ethyldipropyl phosphate, or hydroxyphenyl diphenyl phosphate is preferable.

Examples of the dye and the pigment include a red organic pigment such as para red, fire red, pyrazolone red, thioindigo red, or perylene red, a blue organic pigment such as cyanine blue or indanthrene blue, and a green organic pigment such as cyanine green or naphthol green, and one or two or more of these dyes and pigments can be used.

As the organic dye, a compound having a function of converting ultraviolet rays into visible rays is preferably used.

Examples of the light diffusing agent or the delustering agent can include glass fine particles, polysiloxane-based crosslinked fine particles, crosslinked polymer fine particles, talc, calcium carbonate, and barium sulfate.

Examples of the fluorescent substance can include a fluorescent pigment, a fluorescent dye, a fluorescent white dye, a fluorescent brightening agent, and a fluorescent bleach.

A methacrylic copolymer composition of the present invention is not particularly limited by a preparation method thereof, and can be prepared, for example, by melt-kneading the methacrylic copolymer of the present invention, additives such as ultraviolet absorber, and another polymer selected if necessary and having an opposite sign of an orientation birefringence or a photoelastic coefficient. The melt-kneading can be performed using, for example, a melt-kneader such as a kneader-ruder, an extruder, a mixing roll, or a Banbury mixer. A temperature at the time of kneading can be appropriately set according to a softening temperature of each of the methacrylic copolymer and the other polymer, and can be, for example, 150 to 300°C. In addition, a shear rate during kneading can be set to, for example, 10 to 5,000 $sec^{-1}$.

The methacrylic copolymer composition of the present invention can be in the form of pellets or the like in order to improve convenience during storage, transportation, or molding.

The molded article of the present invention contains the methacrylic copolymer or the methacrylic copolymer composition of the present invention. A method for producing a molded article of the present invention is not particularly limited. Examples thereof can include melt-molding methods such as a T-die method (a lamination method, a co-extrusion method, or the like), an inflation method (a co-extrusion method or the like), a compression molding method, a blow

molding method, a calendar molding method, a vacuum molding method, an injection molding method, (an insert method, a dichroic method, a press method, a core back method, a sandwich method, or the like), and a solution casting method. Among them, a T-die method, an inflation method, an injection molding method, or a solution casting method is preferable from the viewpoint of high productivity, cost, and the like. The type of the molded article is not limited, and a film (a planar molded article having a thickness of 5 μm or more and 250 μm or less) or a sheet (a planar molded article thicker than 250 pm) is preferable.

The molded article of the present invention has an average value of absolute values of in-plane retardation (Re) of the molded article is, as a value per 1 mm thickness, preferably 10.0 nm or less, more preferably 6.0 nm or less, still more preferably 5.0 nm or less, and further still more preferably 3.0 nm or less.

The film that is one form of the molded article of the present invention can be produced by a solution casting method, a melt-casting method, an extrusion molding method, an inflation molding method, a blow molding method, or the like. Among them, an extrusion molding method or a solution casting method is preferable from the viewpoint of obtaining a film that is excellent in transparency, and has improved toughness, excellent handleability, and an excellent balance among toughness, surface hardness, and rigidity. The temperature of the molten resin discharged from the extruder is set to preferably 160 to 270°C and more preferably 220 to 260°C.

Among the extrusion molding methods, a T-die method is preferable from the viewpoint of obtaining a film having excellent surface smoothness, excellent specular gloss, and a low haze. In the T-die method, it is preferable that the molten resin discharged from a T-die through an extruder, a gear pump, a polymer filter, and a mixer is interposed between two or more mirror surface rolls or mirror surface belts to be formed into a film. A bank may or may not be formed when the molten resin is interposed between mirror surface rolls or mirror surface belts. The die has an automatic adjustment function of a lip opening degree, and an air gap is preferably 100 mm or less.

The mirror surface roll or the mirror surface belt is preferably formed of a metal. As the mirror surface roll, a metal rigid roll, a metal elastic roll, or the like can be used, and it is preferable to use a combination of the metal elastic roll and the metal rigid roll. In addition, temperatures of both surfaces of the mirror surface roll or the mirror surface belt are preferably 130°C or lower. In addition, it is preferable that the temperature of at least one surface of a pair of mirror surface rolls or mirror surface belts is 60°C or higher. When the temperature of the surface is set as described above, the molten resin discharged from the extruder can be cooled at a speed faster than natural cooling, and a film that is excellent in surface smoothness and has a low haze can be easily produced. A linear pressure between the pair of rolls or belts is preferably 10 N/mm or more and more preferably 30 N/mm or more. A thickness of the unstretched film obtained by extrusion molding is preferably 10 to 300 um. The haze of the film is preferably 0.7% or less, more preferably 0.5% or less, and still more preferably 0.3% or less at a thickness of 100 μm.

The unstretched film obtained as described above may be subjected to a stretching treatment. The mechanical strength is increased by the stretching treatment, and a film that is hardly cracked can be obtained. A stretching method is not particularly limited, and examples thereof can include a simultaneous biaxial stretching method, a sequential biaxial stretching method, and a tubular stretching method. From the viewpoint of obtaining a film that can be uniformly stretched and has high strength, a lower limit of the temperature during the stretching is a temperature higher than the glass transition temperature of the methacrylic copolymer or the methacrylic copolymer composition by 10°C, and an upper limit of the temperature during the stretching is a temperature higher than the glass transition temperature of the methacrylic copolymer or the methacrylic copolymer composition by 40°C. The stretching is usually performed at 100 to 5,000 %/min. A film with less thermal shrinkage can be obtained by performing heat fixation after the stretching. A thickness of the film after the stretching is preferably 10 to 200 μm.

A functional layer may be provided on a surface of the film that is one form of the molded article of the present invention. Examples of the functional layer can include a hard coat layer, an antiglare layer, an antireflection layer, a stacking prevention layer, a diffusion layer, an antiglare layer, an antistatic layer, an antifouling layer, and an easily slipping layer such as fine particles.

In addition, it is preferable to provide an undercoat layer on at least one surface of the film of the present invention in order to improve adhesion strength with the functional layer or to improve adhesion strength in lamination with another film via an adhesive or a pressure-sensitive adhesive.

A laminate can be obtained by laminating a layer containing the methacrylic copolymer or the methacrylic copolymer composition of the present invention and another material (for example, a layer containing another thermoplastic copolymer). Examples of the other material used in the laminate can include plastic (for example, a thermoplastic resin) and glass. The laminate obtained by the present invention can be preferably used for an automobile interior member surface, a mobile phone surface, a computer surface, a vending machine surface, or the like.

Since the film that is one form of the molded article of the present invention has high transparency and heat resistance, it is suitable for optical applications, and is particularly suitable for a polarizer protective film, a liquid crystal protective plate, a surface material for a portable information terminal, a display window protective film of a portable information terminal, a light guide film, a transparent conductive film with a surface to which silver nanowires or carbon nanotubes are applied, and front plate applications for various displays. Since the film of the present invention has high

transparency and heat resistance, the film can be used as an infrared cut film, a crime prevention film, a scattering prevention film, a decorative film, a metal decorative film, a shrink film, and a film for in-mold labels as applications other than optical applications.

In a case where the film that is one form of the molded article of the present invention is used as a polarizer protective film or a retardation film, the film may be laminated on only one surface or both surfaces of a polarizer film. When laminated with a polarizer film, the film can be laminated with an adhesive layer or a pressure-sensitive adhesive layer. As the polarizer film, a stretched film formed of a polyvinyl alcohol-based resin and iodine can be used, and the film thickness thereof is preferably 1 to 100 μm.

[Examples]

Next, the present invention will be more specifically described with reference to Examples. Note that the present invention is not limited by the Examples.

Physical properties and the like were measured by the following method.

(Polymerization Conversion Rate)

INERTCAP1 (df = 0.4 pm, 0.25 mm I.D. × 60 m) manufactured by GL Sciences Inc. was connected as a column to a gas chromatograph GC-14A manufactured by SHIMADZU CORPORATION, analysis was performed under the following conditions, and calculation was performed based on the analysis.

Injection temperature = 250°C
Detector temperature = 250°C
Temperature conditions: held at 60°C for 5 minutes → raised to 250°C at 10 °C/min → held at 250°C for 10 minutes

(Molecular Weight Distribution Mw/Mn)

A weight average molecular weight (Mw) and a molecular weight distribution (Mw/Mn) of a resin were determined by a gel permeation chromatography method (GPC method). A sample solution was prepared by dissolving 4 mg of a resin to be measured in 5 ml of tetrahydrofuran. A temperature of a column oven was set to 40°C, 20 μl of the sample solution was injected into an apparatus at an eluent flow rate of 0.35 ml/min, and a chromatogram was measured. 10 standard polystyrenes having a molecular weight within a range of 400 to 5,000,000 were subjected to GPC measurement, and a calibration curve showing a relationship between the holding time and the molecular weight was created. Based on the calibration curve, Mw and Mw/Mn of the resin to be measured were determined.

Apparatus: GPC apparatus HLC-8320 manufactured by Tosoh Corporation
Separation column: serially connected TSK guard column Super HZ-H, TSKgel HZM-M, and TSKgel Super HZ4000 manufactured by Tosoh Corporation
Eluent: tetrahydrofuran
Eluent flow rate: 0.35 ml/min
Column temperature: 40°C
Detection method: differential refractive index (RI)

(Each Unit Composition in Copolymer)

A proton ratio of a phenyl group of an α-methylstyrene unit or a styrene unit to a methoxy group of a methyl methacrylate unit was determined by $^1$H-NMR, and a content of the α-methylstyrene unit or the styrene unit was calculated by the proton ratio.

(Glass Transition Temperature Tg)

The methacrylic copolymer obtained in each of Examples was heated to 250°C and then cooled to room temperature, and then, a DSC curve was measured under a condition in which the temperature was raised from room temperature to 200°C at 10 °C/min using a differential scanning calorimeter (manufactured by SHIMADZU CORPORATION, DSC-50 (product number)) in accordance with JIS K7121. A glass transition temperature at the midpoint obtained from the DSC curve measured at the time of the second temperature rise was defined as the glass transition temperature in the present invention.

(Imidization Rate)

$^1$H-NMR measurement of the copolymer was performed using $^1$H-NMR (manufactured by Bruker Corporation, trade name: ULTRA SHIELD 400 PLUS), and a value determined by the following equation using an area A of a peak derived from an O-$CH_3$ group of methyl methacrylate near 3.5 to 3.8 ppm and an area B of a peak derived from an N-$CH_3$ group of glutarimide near 3.0 to 3.3 ppm was defined as an imidization rate (mol%).

$$(\text{Imidization rate (mol\%)}) = [B/(A + B)] \times 100$$

imidization rate (wt%) was calculated from the imidization rate (mol%).

(Photoelastic Coefficient)

The methacrylic copolymer was press-molded to obtain a 1.0 mm sheet. A test piece with a size of 15 mm × 60 mm was cut out from the central portion of the obtained press-molded sheet. Both ends of the cut sheet in a long side direction were fixed so that a distance between chucks was 45 mm, and tension was applied to the sheet stepwise from 0 N to 100 N at every 10 N using an X-axis ARI-type stage B05-11BM manufactured by SURUGA SEIKI CO., LTD. The tension T was monitored by a sensor separate-type digital force gauge ZPS-DPU-50N manufactured by IMADA Co., Ltd. A phase difference PD in a state where each tension was applied was measured at a D-line wavelength of Na using KOBRA-WR manufactured by Oji Scientific Instruments Co., Ltd. After the phase difference measurement, the sheet was removed from the jig, and the thickness d of the phase difference measurement portion was measured. A cross-sectional area S = 15 mm × d, stress $\sigma$ (= T/S), and a birefringence $\Delta n$ (= PD/d) of the sheet were calculated from the measured values, the stress $\sigma$ and the birefringence $\Delta n$ were plotted on the horizontal axis and the vertical axis, respectively, and a slope of a straight line obtained by a least square method was defined as the photoelastic coefficient.

(Orientation Birefringence)

The methacrylic copolymer was press-molded to obtain a 1.0 mm sheet. A test piece with a size of 20 mm × 40 mm was cut out from the central portion of the obtained press-molded sheet, and the test piece was placed on an autograph with a heating chamber (manufactured by SHIMADZU CORPORATION). A distance between grips in the autograph was set to 20 mm, and the test piece was held at a glass transition temperature +10°C for 3 minutes. Thereafter, the test piece was stretched (the distance between the grips was 40 mm) by 100% in one direction at a rate of 3 mm/min. The obtained stretched film was cooled to 23°C and removed from the autograph, and a phase difference PD at the central portion of the stretched film was measured at a D-line wavelength of Na using KOBRA-WR manufactured by Oji Scientific Instruments Co., Ltd. A thickness d of the phase difference measurement portion was measured. A birefringence $\Delta n$ (= PD/d) was calculated from the measured value, and the calculated birefringence was defined as the orientation birefringence.

Production Example 1

Purified methyl methacrylate (MMA), $\alpha$-methylstyrene ($\alpha$MS), 2,2'-azobis(2-methylpropionitrile) (AIBN), and n-octyl mercaptan (n-OM) were charged into an autoclave A with a stirrer in proportions shown in Table 1, and the mixture was uniformly dissolved, thereby obtaining a polymerization raw material.

The polymerization raw material was continuously supplied from the autoclave A to a tank-type reactor controlled to the polymerization temperature as shown in Table 1 at 1.5 kg/hr, the polymerization raw material was subjected to a polymerization reaction by a bulk polymerization method during the average retention time shown in Table 1, and a solution containing a methacrylic copolymer was continuously discharged from the tank-type reactor. The polymerization conversion rate was the value as shown in Table 1. Subsequently, the solution discharged from the reactor was heated to 230°C and supplied to a twin-screw extruder controlled to 240°C. In the twin-screw extruder, a volatile matter composed of an unreacted monomer as a main component was separated and removed, and the methacrylic copolymer was extruded as a strand. The strand was cut with a pelletizer to obtain pellets of a methacrylic copolymer A-a.

Production Example 2

Pellets of a methacrylic polymer A-b were obtained in the same manner as that of Production Example 1, except that the composition of the raw material solution and the polymerization conditions were changed as shown in Table 1.

Production Example 3

An MS resin (a copolymer of methyl methacrylate (MMA) and styrene (St)) was produced according to the production method of a copolymer (A) described in the section of [Examples] in JP2003-231785A. A solution containing a methacrylic copolymer A-c was obtained by changing the mass ratio of MMA, St, and t-dodecyl mercaptan (t-DM) to be charged into the autoclave. Subsequently, the solution containing the methacrylic copolymer was heated to 230°C and supplied to a twin-screw extruder controlled to 240°C. In the twin-screw extruder, a volatile matter composed of an unreacted monomer as a main component was separated and removed, and the methacrylic copolymer was extruded as a strand. The strand was cut with a pelletizer to obtain pellets of a methacrylic copolymer A-c.

Using the copolymer pellets, a weight average molecular weight Mw, a molecular weight distribution Mw/Mn, a proportion of the α-methylstyrene unit or the styrene unit, and a glass transition temperature Tg were measured. The results are shown in Table 1. Note that in the present production example, the amount of the unit derived from MMA was the amount of the units other than the α-methylstyrene unit or the styrene unit, and thus, the description thereof in the table was omitted.

[Table 1]

| | | Production Example 1 | Production Example 2 | Production Example 3 |
|---|---|---|---|---|
| | | A-a | A-b | A-c |
| <Raw material solution> | | | | |
| MMA | wt% | 90 | 100 | 90 |
| αMS | wt% | 10 | 0 | 0 |
| st | wt% | 0 | 0 | 10 |
| n-OM | phr | 0.025 | 0.290 | - |
| t-Dodecyl mercaptan | phr | - | - | 0.33 |
| AIBN | ppm | 400 | 50 | - |
| Polymerization temperature | °c | 120 | 140 | - |
| Average retention time | h | 3.0 | 2.0 | - |
| Polymerization conversion rate | % | 40 | 55 | 51 |
| <Obtained polymer> | | | | |
| Content of structural unit derived from α-methylstyrene | wt% | 8.0 | 0 | 0 |
| Content of structural unit derived from styrene | wt% | 0 | 0 | 10 |
| Weight average molecular weight | g/mol | 92k | 75k | 95k |
| Molecular weight distribution (Mw/Mn) | - | 2.0 | 1.9 | 2.0 |
| Glass transition temperature [°C] | °c | 127 | 120 | 116 |

<Example 1>

To a transport part of a twin-screw extruder (manufactured by TECHNOVEL CORPORATION, trade name: KZW20TW-45MG-NH-600) in which the transport part, a melt-kneading part, a devolatilization part, and a discharge part were included and a screw rotation speed and a temperature were set to 120 rpm and 250°C, respectively, the copolymer [A-a] shown in Production Example 1 was supplied at 2 kg/hr, and monomethylamine was injected at 0.10 kg/hr through an additive supply port of the twin-screw extruder in the melt-kneading part installed in a kneading block to react the precursor polymer [A-a] and the monomethylamine. Note that a reverse flight was installed in the screw at the end of a reaction zone.

In the devolatilization part set to 20 Torr (about 2.7 kPa), a by-product and excessive monomethylamine were volatilized from the molten resin passed through the melt-kneading part and discharged through a vent.

The molten resin discharged as a strand from a die provided at the end of the discharge part of the twin-screw extruder was cooled in a water tank, and then, the strand was cut with a pelletizer, thereby obtaining a pellet-like methacrylic copolymer (A-a-1) .

To a transport part of a twin-screw extruder (manufactured by TECHNOVEL CORPORATION, trade name: KZW20TW-45MG-NH-600) in which the transport part, a melt-kneading part, a devolatilization part, and a discharge part were included and a screw rotation speed and a temperature were set to 100 rpm and 230°C, respectively, the copolymer (A-a-1) was supplied at 1 kg/hr, and in the melt-kneading part installed in the kneading block, a solution containing 0.8 parts by mass of dimethyl carbonate and 0.2 parts by mass of triethylamine was injected at 0.024 kg/hr, and dimethyl carbonate was reacted with a carboxy group in the methacrylic copolymer (A-a-1) . Note that a reverse flight was installed in the screw at the end of a reaction zone.

In the devolatilization part set to 20 Torr (about 2.7 kPa), a by-product and excessive dimethyl carbonate were volatilized from the molten resin passed through the melt-kneading part and discharged through a vent.

The molten resin discharged as a strand from a die provided at the end of the discharge part of the twin-screw extruder was cooled in a water tank, and then, the strand was cut with a pelletizer, thereby obtaining a pellet-like methacrylic copolymer (A-a-2) .

To a transport part of a twin-screw extruder (manufactured by TECHNOVEL CORPORATION, trade name: KZW20TW-45MG-NH-600) in which the transport part, a melt-kneading part, a devolatilization part, and a discharge part were included and a screw rotation speed and a temperature were set to 100 rpm and 230°C, respectively, the methacrylic copolymer (A-a-2) was supplied at 1 kg/hr

In the devolatilization part set to 20 Torr (about 2.7 kPa), a volatile matter such as an unreacted matter was volatilized from the molten resin passed through the melt-kneading part and discharged through a vent.

The molten resin discharged as a strand from a die provided at the end of the discharge part of the twin-screw extruder was cooled in a water tank, and then, the strand was cut with a pelletizer, thereby obtaining a pellet-like methacrylic copolymer [1]. The methacrylic copolymer [1] had an imidization rate of 8.6 mol%, a glass transition temperature of 130°C, an orientation birefringence of $8.4 \times 10^{-4}$, and a photoelastic coefficient of $-5.5 \times 10^{-12}$ $Pa^{-1}$. The physical properties of the methacrylic copolymer [1] are shown in Table 2.

<Example 2>

A methacrylic copolymer [2] was obtained in the same manner as that of Example 1, except that the amount of monomethylamine added was injected at 0.15 kg/hr, and a solution containing 0.8 parts by mass of dimethyl carbonate and 0.2 parts by mass of triethylamine was injected at 0.036 kg/hr in Example 1. The physical properties of the methacrylic copolymer [2] are shown in Table 2.

<Comparative Example 1>

A methacrylic copolymer [3] was obtained in the same manner as that of Example 1, except that the methacrylic copolymer A-c was used as the precursor resin. The physical properties of the methacrylic copolymer [3] are shown in Table 2.

<Example 3>

50 parts by mass of the methacrylic copolymer [2] synthesized in Example 1 and 50 parts by mass of the methacrylic resin synthesized in Production Example 2 were kneaded under a temperature condition of 230°C by a small melt-kneader to obtain a methacrylic copolymer composition. The physical properties of the methacrylic copolymer composition [4] are shown in Table 3.

<Comparative Examples 2, 3, and 4>

Physical properties were evaluated in the same manner as that of Example 1, except that the copolymers [A-a], [A-b], and [A-c] shown in Production Example 1 were used instead of the methacrylic copolymer [1]. The results are shown in Table 3.

<Comparative Example 5 (3FMA)>

100 parts by mass of 2,2,2-trifluoroethyl methacrylate (3FMA), 0.06 parts by mass of azobisisobutyronitrile, 0.2 parts by mass of octyl mercaptan, 231 parts by mass of water, 1.4 parts by mass of a dispersant, and 17.5 parts by mass of a pH adjuster were charged into an autoclave. While the inside of the autoclave was stirred, the solution

temperature was increased from room temperature to 70°C, the temperature was held at 70°C for 120 minutes, and then, the temperature was held at 120°C for 60 minutes to perform suspension polymerization. The solution temperature was lowered to room temperature, and the polymerization reaction solution was extracted from the autoclave. A solid content was taken out from the polymerization reaction solution by filtration, washed with water, and hot air-dried at 80°C for 24 hours. The obtained solid content was supplied to a hopper of a twin-screw extruder and melt-kneaded at a cylinder temperature of 230°C. Thereafter, the molten resin was extracted to obtain a pellet-like fluoromethacrylate polymer. Subsequent operations were performed in the same manner as those of Example 1, and physical properties were evaluated. The evaluation results are shown in Table 3.

<Comparative Example 6>

50 parts by mass of the fluoromethacrylate polymer synthesized in Comparative Example 3 and 50 parts by mass of the methacrylic resin synthesized in Production Example 2 were kneaded under a temperature condition of 230°C by a small melt-kneader to obtain a methacrylic copolymer composition. The methacrylic copolymer composition had two glass transition temperatures of 72°C and 120°C, and was a non-compatible system. The appearance was turbid, and the orientation birefringence and the photoelastic coefficient were unmeasurable.

[Table 2]

| | | Example 1 | Example 2 | Comparative Example 1 |
|---|---|---|---|---|
| Methacrylic copolymer | | [1] | [2] | [3] |
| Polymer used for imidization modification | | A-a | A-a | A-c |
| Imidization rate | mol% | 8.6 | 13.0 | 9.0 |
| Content of methyl methacrylate unit | wt% | 79.5 | 73.6 | 77.3 |
| Content of α-methylstyrene unit | wt% | 8.0 | 8.0 | - |
| Content of styrene structural unit | wt% | - | - | 10.0 |
| Content of N-methylglutarimide unit | wt% | 12.5 | 18.4 | 12.7 |
| Weight average molecular weight (Mw) after imidization reaction | | 90k | 90k | 95k |
| Glass transition temperature | °C | 130 | 140 | 120 |
| Orientation birefringence | $\times 10^{-4}$ | 8.4 | 13.8 | -10.3 |
| Photoelastic coefficient | $\times 10^{-12}$/Pa | -5.5 | -6.3 | -2.4 |

[Table 3]

| | | Example 3 | Comparativ e Example 2 | Comparativ e Example 3 | Comparativ e Example 4 | Comparativ e Example 5 | Comparativ e Example 6 |
|---|---|---|---|---|---|---|---|
| Methacrylic copolymer [2] | wt% | 50 | | | | | |
| Methacrylic copolymer [A-a] | wt% | | 100 | | | | |
| Methacrylic polymer [A-b] | wt% | 50 | | 100 | | | 50 |
| Methacrylic copolymer [A-c] | wt% | | | | 100 | | |
| 3FMA polymer | wt% | | | | | 100 | 50 |
| Weight average molecular weight (Mw) | g/mol | 90k | 92k | 75k | 95k | 90k | 90k |
| Imidization rate | mol% | 6.5 | - | - | - | - | - |
| Glass transition temperature | °C | 130 | 127 | 120 | 116 | 72 | Incompatib le |
| Orientation birefringence | ×10-9 | 5.6 | -2.23 | -2.6 | -27.2 | -2.6 | - |
| Photoelastic coefficient | $\times 10^{-12}$/Pa | -5.4 | -4.0 | -4.6 | -3.2 | -1.7 | - |

The methacrylic copolymers obtained in Examples 1 and 2 and the methacrylic copolymer composition obtained in Example 3 have high heat resistance, a positive value of an orientation birefringence, and a negative value of a photoelastic coefficient, and are excellent in compatibility with another resin, and thus can be suitably used as materials constituting an optical member. In particular, the methacrylic copolymer and the methacrylic copolymer composition are blended with another resin having an opposite sign of an orientation birefringence or a photoelastic coefficient (for example, a styrene-acrylonitrile copolymer (orientation birefringence: negative, photoelastic coefficient: positive), polymethyl methacrylate (orientation birefringence: negative, photoelastic coefficient: negative), polybenzyl methacrylate (orientation birefringence: positive, photoelastic coefficient: positive)), which is useful in that the birefringence of the phase difference of the obtained molded article can be reduced. On the other hand, the methacrylic copolymers obtained in Comparative Examples 1 to 5 did not fall within the scope of the present invention, and thus had low heat resistance and a negative value of an orientation birefringence and were inferior to the present invention. The methacrylic copolymer composition obtained in Comparative Example 6 was a non-compatible system and was inferior to the present invention.

## Claims

**1.** A methacrylic copolymer comprising:

40 to 87% by mass of a methyl methacrylate unit;
6 to 30% by mass of a structural unit (R) having at least one ring structure in a main chain, the structural unit (R) being selected from the group consisting of a lactone ring unit, a glutaric anhydride unit, and an N-substituted or unsubstituted glutarimide unit; and
7 to 30% by mass of an $\alpha$-methylstyrene unit,
wherein the methacrylic copolymer has a glass transition temperature of 120°C or higher,
the methacrylic copolymer has a negative value of a photoelastic coefficient, and
an orientation birefringence of a stretched film is positive, the stretched film being obtained by stretching a sheet formed of the methacrylic copolymer with a size of 20 mm in width × 40 mm in length × 1.0 mm in thickness by 100% in one direction at a rate of 3 mm/min and a temperature higher than the glass transition temperature by 10°C.

**2.** The methacrylic copolymer according to claim 1, wherein the structural unit (R) is an N-substituted or unsubstituted glutarimide unit represented by Formula (1):

[Chem. 1]

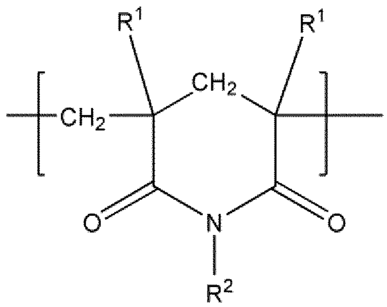

(1)

in Formula (1), $R^1$'s are each independently a hydrogen atom or a methyl group, and $R^2$ is a hydrogen atom, an alkyl group having 1 to 18 carbon atoms, a cycloalkyl group having 3 to 12 carbon atoms, or an organic group having an aromatic ring and 6 to 15 carbon atoms.

**3.** A composition obtained by melt-kneading the methacrylic copolymer according to claim 1 or 2 and another resin.

**4.** A molded article comprising the methacrylic copolymer according to claim 1 or 2 or the composition according to claim 3.

**5.** The molded article according to claim 4, wherein the molded article is a film or a sheet.

**6.** A method for producing a film or a sheet, the method comprising a step of molding the methacrylic copolymer

according to claim 1 or 2 or the composition according to claim 3 into a film or a sheet by a melt-molding method.

7. A method for producing a film or a sheet, the method comprising a step of molding the methacrylic copolymer according to claim 1 or 2 or the composition according to claim 3 into a film or a sheet by a solution casting method.

8. A laminate comprising at least one layer formed of a film or sheet containing the methacrylic copolymer according to claim 1 or 2 or the composition according to claim 3.

## INTERNATIONAL SEARCH REPORT

International application No.
PCT/JP2021/011682

A. CLASSIFICATION OF SUBJECT MATTER

C08F 8/16(2006.01)i; C08F 8/32(2006.01)i; C08F 220/14(2006.01)i; C08F 222/04(2006.01)n; C08F 222/40(2006.01)n; C08L 33/12(2006.01)i; C08L 101/00(2006.01)i; C08J 5/18(2006.01)i

FI: C08F220/14; C08F8/16; C08F8/32; C08J5/18 CEY; C08L33/12; C08L101/00; C08F222/04; C08F222/40

According to International Patent Classification (IPC) or to both national classification and IPC

B. FIELDS SEARCHED

Minimum documentation searched (classification system followed by classification symbols)

C08F8/16; C08F8/32; C08F220/14; C08F222/04; C08F222/40; C08L33/12; C08L101/00; C08J5/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2001-270905 A (MITSUBISHI RAYON CO., LTD.) 02 October 2001 (2001-10-02) entire text | 1-8 |
| A | JP 2009-248361 A (SUMITOMO CHEMICAL CO., LTD.) 29 October 2009 (2009-10-29) entire text | 1-8 |
| A | JP 4-218570 A (ROHM AND HAAS COMPANY) 10 August 1992 (1992-08-10) entire text | 1-8 |
| A | KR 10-2014-0146902 A (LG CHEM. LTD.) 29 December 2014 (2014-12-29) entire text | 1-8 |
| A | JP 61-152758 A (MITSUBISHI RAYON CO., LTD.) 11 July 1986 (1986-07-11) entire text | 1-8 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>18 May 2021 (18.05.2021) | Date of mailing of the international search report<br>01 June 2021 (01.06.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/011682

C (Continuation). DOCUMENTS CONSIDERED TO BE RELEVANT

| Category* | Citation of document, with indication, where appropriate, of the relevant passages | Relevant to claim No. |
|---|---|---|
| A | JP 61-155443 A (MITSUBISHI RAYON CO., LTD.) 15 July 1986 (1986-07-15) entire text | 1-8 |
| A | JP 2008-285615 A (KANEKA CORP.) 27 November 2008 (2008-11-27) entire text | 1-8 |
| A | JP 2009-203348 A (KANEKA CORP.) 10 September 2009 (2009-09-10) entire text | 1-8 |
| A | JP 2017-132981 A (ASAHI KASEI CORPORATION) 03 August 2017 (2017-08-03) entire text | 1-8 |
| A | JP 2017-179103 A (KURARAY CO., LTD.) 05 October 2017 (2017-10-05) entire text | 1-8 |
| A | WO 2018/152522 A1 (ARKEMA FRANCE) 23 August 2018 (2018-08-23) entire text | 1-8 |
| P, A | WO 2020/138315 A1 (KURARAY CO., LTD.) 02 July 2020 (2020-07-02) entire text | 1-8 |
| P, A | WO 2020/138175 A1 (KURARAY CO., LTD.) 02 July 2020 (2020-07-02) entire text | 1-8 |

Form PCT/ISA/210 (continuation of second sheet) (January 2015)

**INTERNATIONAL SEARCH REPORT**
Information on patent family members

International application No.
PCT/JP2021/011682

| Patent Documents referred in the Report | Publication Date | Patent Family | Publication Date |
|---|---|---|---|
| JP 2001-270905 A | 02 Oct. 2001 | US 2003/0013829 A1<br>entire text<br>WO 2001/053365 A1 | |
| JP 2009-248361 A | 29 Oct. 2009 | (Family: none) | |
| JP 4-218570 A | 10 Aug. 1992 | EP 438239 A2<br>entire text<br>KR 10-1991-0014465 A | |
| KR 10-2014-0146902 A | 29 Dec. 2014 | (Family: none) | |
| JP 61-152758 A | 11 Jul. 1986 | (Family: none) | |
| JP 61-155443 A | 15 Jul. 1986 | (Family: none) | |
| JP 2008-285615 A | 27 Nov. 2008 | (Family: none) | |
| JP 2009-203348 A | 10 Sep. 2009 | (Family: none) | |
| JP 2017-132981 A | 03 Aug. 2017 | KR 10-2017-0087815 A | |
| JP 2017-179103 A | 05 Oct. 2017 | (Family: none) | |
| WO 2018/152522 A1 | 23 Aug. 2018 | JP 2020-509115 A<br>US 2019/0367720 A1<br>EP 3583160 A1<br>KR 10-2019-0116472 A<br>CN 110520465 A | |
| WO 2020/138315 A1 | 02 Jul. 2020 | (Family: none) | |
| WO 2020/138175 A1 | 02 Jul. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079694 A
- JP 2000230016 A
- JP 2001151814 A
- JP 2002120326 A
- JP 2002254544 A
- JP 2005146084 A
- JP 2007197703 A
- JP 2010096919 A
- WO 200510838 A1
- JP 2010254742 A
- JP 2008273140 A
- JP 2008274187 A
- JP 2005023272 A
- WO 2011089794 A1
- WO 2012124395 A1
- JP 2012012476 A
- JP 2013023461 A
- JP 2013112790 A
- JP 2013194037 A
- JP 2014062228 A
- JP 2014088542 A
- JP 2014088543 A
- JP 2003231785 A